# EUROPEAN PATENT APPLICATION

(11) **EP 0 713 346 A1**
(43) Date of publication of application: **22.05.1996**
(21) Application number: 94480136.4
(22) Date of filing: 15.11.1994
(51) Int. Cl.: H04Q 11/04, H04L 12/66, H04L 12/433

(54) **Method and circuit to connect ATM/FDDI devices to ATM/SDH devices**

(71) Applicant: INTERNATIONAL BUSINESS MACHINES CORPORATION, Armonk, N.Y. 10504 (US)
(72) Inventor: Baudelot, Francis, F-06200 Nice (FR); Benayoun, Alain, F-06800 Cagnes sur Mer (FR); Michel, Patrick, F-06610 La Gaude (FR); Le Pennec, Jean-François, F-06100 Nice (FR)
(74) Representative: de Pena, Alain

(57) **Abstract**

The present invention enables a device using a Fiber Distributed Data Interface protocol in the Asynchronous Transfer Mode to communicate with another device using a Synchronous Digital Hierarchy protocol in the Asynchronous Transfer Mode, according to a method which is implemented in an associated conversion circuit wherein both devices uses different data formats and transmission speeds. When a FDDI receiver receives a data ATM cell, it detects the start_of_cell of the received data ATM cells and writes the data bytes into FIFO buffer at the same frequency. A counter is incremented each time a data ATM cell is stored in the FIFO buffer. As long as the counter is not equal to 0, the data ATM cell is transmitted byte by byte from the FIFO buffer to a SDH Transmitter on its request at another frequency. The counter is decremented each time a data ATM cell is transmitted. When the counter is equal to 0 then empty ATM cells are generated and transmitted to the SDH Transmitter on its request. Therefore, a multiplexer is required to multiplex data cells and empty cells, and to transmit them to the SDH transmitter with respect to the SDH link speed transmission. Conversely, the ATM cells received by a SDH receiver are stored in a dual port memory. In parallel, the header of the received ATM cell is decoded by an empty cell detection circuit. If the ATM cell is an empty cell, it is discarded from the memory. If the ATM cell is a data cell, the ATM cell is stored in the memory and a counter is incremented. As long as this counter is not equal to 0, one data cell is tranmsitted from the memory to a FDDI transmitter, preceded by a byte delimiter 'TT'. At the end of the data cell transmission, the counter is decremented. If the counter is equal to 0, which means that no data ATM cell has been received from the SDH link, then the FDDI transmitter sends idle byte 'JK' on the FDDI link.

## Description

### Technical field of the invention

The present invention relates to a data communication system and more particularly to a method and a circuit implemented in such a system for connecting devices operating according to an asynchronous transfer mode using a fixed length of data bytes such as the Asynchronous Transfer Mode (ATM) and using first protocol such as a Fiber Distributed Data Interface (FDDI) protocol to devices operating according to the Asynchronous Transfer Mode (ATM) and using a protocol such as a Synchronous Digital Hierarchy protocol.

### Background Art

In the world of telecommunication in which there is a wide variety of systems that operate according to specific protocols, it is required to devise converter circuits which enable the different systems to communicate to each other. Especially when on one hand the data are received and transmitted on electrical lines operating at a certain speed according to an ATM/FDDI protocol and on the other hand the data are received and transmitted on electrical lines operating at another speed according to an ATM/SDH protocol.

As an introduction, we will therefore firstly describe what the Asynchronous Transfer Mode (ATM) is and finally what the ATM/FDDI and the ATM/SDH protocols mean in order to understand the problem that springs from the connection between an ATM/FDDI device and an ATM/SDH device.

The Asynchronous Transfer Mode (ATM) is the foundation for the future broadband communication networks. It enables the switching and multiplexing technique chosen by CCITT for the broadband access to the communication networks and is expected to have a rapid growth in the near future. It is more detailed in an article 'The Asynchronous Transfer Mode: a tutorial' written by J.Y. Le Boudec in a review Computer Networks and ISDN System 24 (1992) 279-309 North-Holland.

The ATM is used to transport all services with the same format of packets (called cells), and various kinds of information (voice, data, animated images and multimedia) can make use of the ATM protocol where short cells enable to reduce the transfer delay necessary for services like multimedia.

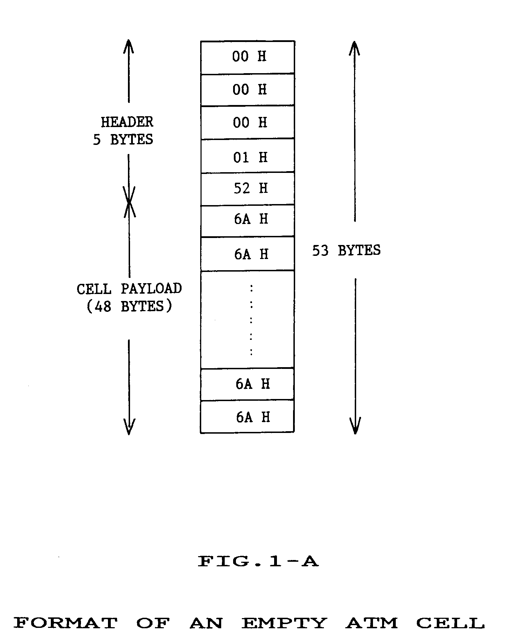

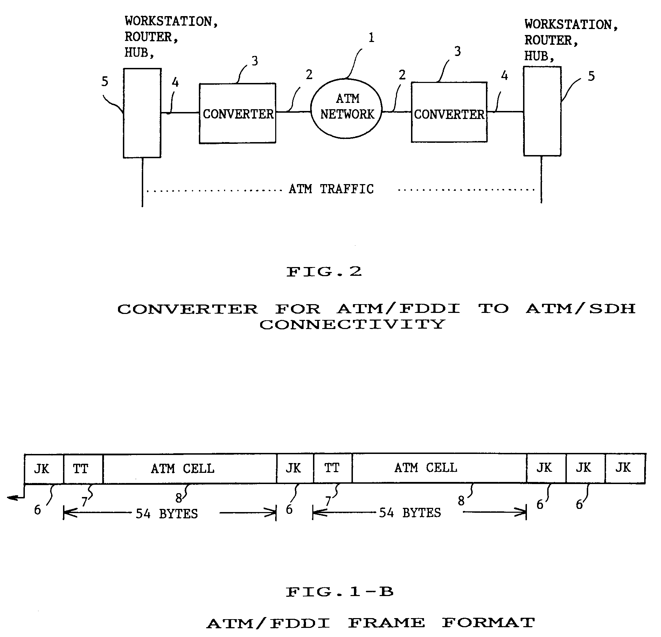

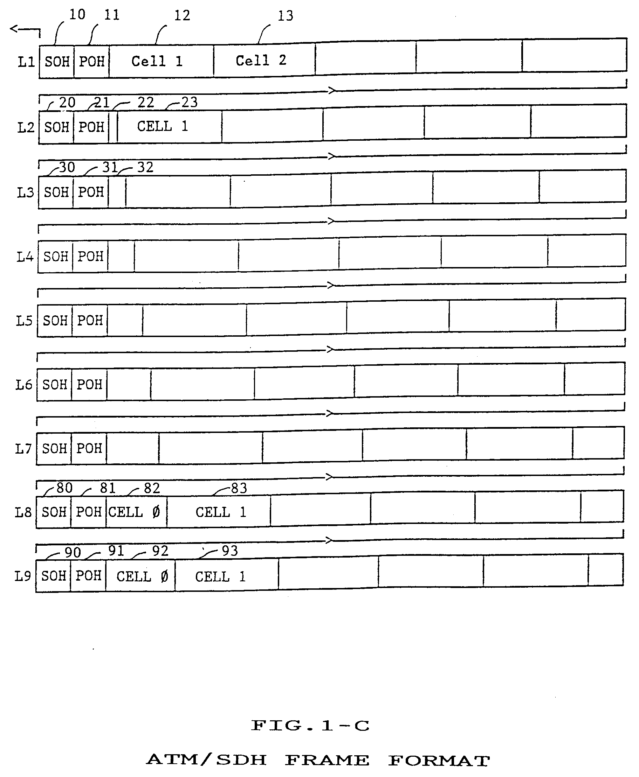

The user-network interface offers one physical channel over which connections are multiplexed using short and fixed length cells refer to figure 1-A. The ATM layer in the network performs relaying functions, with every cell carrying a label used for switching, this label is also the header which contains the routing information, it is not an explicit address because of the short size. Each cell is 53 bytes long, the first five bytes are called the header, and the following 48 bytes is the cell payload and carry the data bytes or may be a idle cell containing no data. In the last case, the first five bytes contain specific code (00H,00H,00H,01H,52H) in order to inform that the 48 bytes that follow do not contain valid data.

The ATM/FDDI device uses a 'cell-based' frame and it operates with a free-running clock to transmit the ATM cells at any time. In case of cell-based frame transmission, the frame contains exactly one data ATM cell and a start_of_frame byte delimiter. In the preferred embodiment of the present invention, an ATM/FDDI frame format is used and is described in figure 1-B. Each data ATM cell (8) is preceded by a 'Start of Frame' byte delimiter referred as 'TT' (7). The data ATM cell in association with the 'TT' byte constitute one frame. Two consecutive frames are separated by at least one 'idle' byte referred as 'JK' (6). When there is no frame to be transmitted, the network link carries idle bytes 'JK' (6).

The ATM/SDH device uses a 'SDH-based' frame and it operates with a free-running clock to transmit the ATM cells at any time. The SDH-based frame requires that the cells be transmitted on the byte stream provided by an underlying transmission protocol. All the timing and synchronization functions are performed according to the SDH protocol. In case of SDH-based frame transmission, the SDH frame payload is not multiple of the cell size. Therefore, the cell boundaries do not have a fixed position in the transmission of frame. Cell boundaries are determined by a cell delineation function which may use a pointer in the Path Overhead (POH). The POH is part of the SDH frame which is transmitted end-to-end and is designed to transmit overhead information. One of these pointers is used to determine the offset between itself and the next cell boundary. As described in figure 1-C, the format is based on 9 by 9 matrixes. Each matrix lasts 125 microseconds. Each line is 270 bytes long and is composed of a SOH (section overhead) field, a POH (path overhead) field and a data field. The SOH field is 9 bytes long, the POH field is one byte long and the data field is 260 bytes long. The data field is filled with ATM cells which may be empty or contain data. In case there is no data cells to be transmitted, the data field is filled with 'empty' or void cells as described in figure 1-A. It must be noted that the chip using the SDH protocol is programmed to generate the POH and SOH fields and also to discard those fields if necessary.

Therefore, in such an environment, the problem to be solved is to provide a converter which enables to cope with the differences between the data formats and between the data communication speeds on both lines in order to enable the connection between the ATM/FDDI devices and the ATM/SDH devices.

### Summary of the invention

The present invention relates to a conversion method for converting bytes cells received by a receiver using a first data format into bytes cells to be transmitted to a transmitter using a second data format, said receiver operating at a first frequency defined by a first oscillator and said transmitter operating at a second faster frequency defined by a second faster oscillator; wherein each bytes cell is composed of a header and a fixed number N of bytes; the conversion method comprising the steps of:
(a) receiving a data bytes cell in the receiver;
(b) transmitting said data bytes cell to a FIFO buffer on a data bus where it is stored;
(c) incrementing a first counter when all the data bytes of the bytes cell are stored in the FIFO buffer;
(d) transmitting byte by byte the data bytes cell from the FIFO buffer to a port A of a multiplexer on a data bus on each request signal of transmitter;
(e) decrementing the value of said first counter at the end of each data bytes cell transmission until it reaches the value 0;
(f) generating an idle bytes cell from an empty cell generator when no data bytes are left in the FIFO buffer, said idle bytes cell being composed of the same number N of bytes;
(g) transmitting the idle bytes cell to a port B of the multiplexer on a data bus; and
(h) generating a port select signal to select port A or B to either transmit the data bytes or the empty bytes of the bytes cell to the transmitter on a data bus.

The method is implemented in a conversion circuit which comprises:
- means for receiving a data bytes cell in the transmitter and transmitting said data bytes cell to a FIFO buffer on a data bus where it is stored from which it is transmitted on data bus;
- a counter responsive to a control signal generated by the receiver for incrementing its register when all the data bytes of the bytes cell are stored in the FIFO buffer and decrementing its register at the end of each data bytes cell transmission from the FIFO buffer;
- means for generating an idle bytes cell when no data bytes are left in the FIFO buffer and for transmitting the idle bytes cell on a data bus; the idle bytes cell being composed of a header and the same number N of bytes; and
- multiplexing means for receiving byte by byte respectively on ports A and B the data bytes cell transmitted from the FIFO buffer on the data bus and the idle bytes cells on the data bus; the multiplexing means being responsive to each request signal of the transmitter and a select port signal to transmit either the data bytes or the empty bytes of the bytes cell to the transmitter on a data bus.

The preferred embodiment of the present invention implements a receiver using a fiber distributed data interface protocol to which is associated the first data format and a transmitter using a synchronous digital hierarchy protocol to which is associated the second data format.

Besides, the present invention relates to a conversion method for converting bytes cells received by a receiver using a first data format into bytes cells to be transmitted to a transmitter using a second data format, the receiver operating at a first frequency defined by a first oscillator and the transmitter operating at a second slower frequency defined by a second oscillator; wherein each bytes cell is composed of a header and a fixed number N of bytes; the conversion method comprising the steps of:
(a) receiving an bytes cell in the receiver;
(b) transmitting the bytes of the bytes cell on a data bus to a storing means and an empty cell detection means which generates an empty cell detection signal by decoding the header of the received bytes cells;
(c) discarding the bytes of empty cells;
(d) incrementing a counter when all the data bytes of the bytes cell are stored in the storing means;
(e) transmitting byte by byte the data bytes cell from storing means to the transmitter; and
(f) decrementing the value of the counter at the end of each data bytes cell transmission until it reaches the value 0.

This method is implemented in a conversion circuit which comprises:
- means for receiving an bytes cell in the receiver and for transmitting byte by byte the bytes cell on a data bus;
- storing means which receives byte by byte the bytes cell, the storing means comprising a dual port bus access associated with a write address pointer and a read address pointer;
- an empty cell detection means which generates an empty cell detection signal by decoding the header of the received bytes cells; and
- a counter for incrementing its register when all the data bytes of the bytes cell are stored in the storing means and decrementing its register at the end of each data bytes cell transmission from the storing means.

The preferred embodiment of the present invention implements a transmitter using a fiber distributed data interface protocol to which is associated the second data format and a receiver using a synchronous digital hierarchy protocol to which is associated the first data format.

### Brief description of the drawings

Figure 1-A represents the format of an empty ATM cell.

Figure 1-B represents the format of the frames on the ATM/FDDI link.

Figure 1-C represents the format of the frame of the ATM/SDH link.

Figure 2 illustrates the general environment in which the converter for ATM/FDDI to ATM/SDH connectivity is implemented according to the present invention.

Figure 3 shows an overview of the block diagram for the conversion of the ATM/FDDI protocol to the ATM/SDH protocol.

Figure 4 shows an overview of the block diagram for the conversion of the ATM/SDH protocol to the ATM/FDDI protocol.

Figure 5 shows the arrangement of figures 6 to 9 representing in details the circuits of the converter according to the present invention.

Figures 6 to 9 shows in details the circuits which are implemented in the converter.

Figure 10 shows the timing diagram of the signals generated from the ATM/FDDI lines to the ATM/SDH lines, and more particularly from the FDDI receiver to the FIFO buffer.

Figure 11 shows the timing diagram of the signals generated from the ATM/FDDI lines to the ATM/SDH lines, and more particularly the encapsulation of the data ATM cell with idle ATM cell.

Figure 12 shows the timing diagram of the signals generated from the ATM/FDDI lines to the ATM/SDH lines, and more particularly how the idle ATM cells are generated.

Figure 13 represents the functional description of the state machine 1.

Figure 14 represents the functional description of the state machine 2.

Figure 15 shows the timing diagram of the signals generated from the ATM/SDH lines to the ATM/FDDI lines, and more particularly the reception of the idle ATM cells.

Figure 16 shows the timing diagram of the signals generated from the ATM/SDH lines to the ATM/FDDI lines, and more particularly the reception of the data ATM cells to be stored in a dual port memory.

Figure 17 shows the timing diagram of the signals generated from the ATM/SDH lines to the ATM/FDDI lines, and more particularly from the Dual Port Memory to the FDDI transmitter.

Figure 18 represents the functional description of the state machine 3.

Figure 19 represents the functional description of the state machine 4.

### Detailed description of the present invention

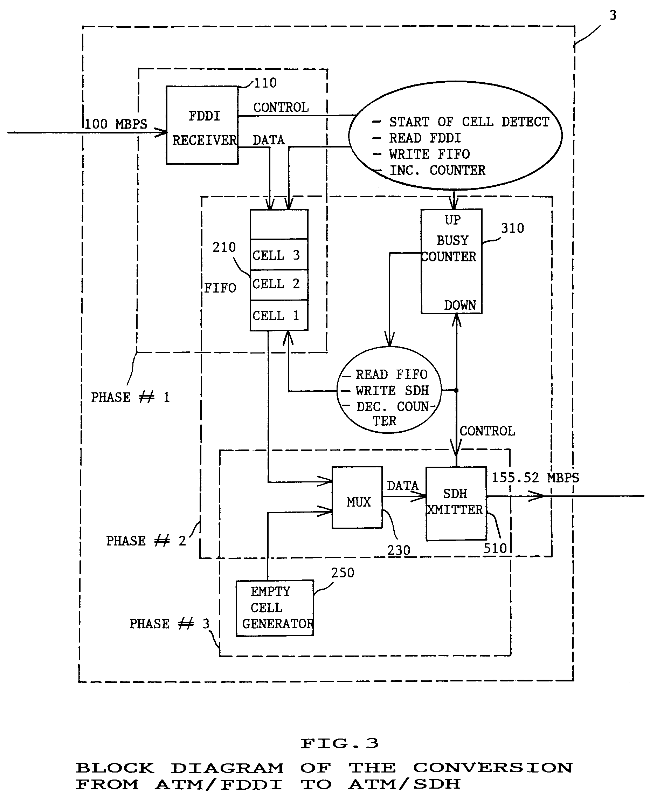

Figure 2 illustrates an example of an environment in which a workstation, router, hub or any other communication device (5) is to be connected to another workstation (5) through any ATM public or private network (1). In our environment, the ATM network operates according to the SDH protocol (2) at high speed which is in this example at 155.52 Mbps. The converter (3) of the present invention enables the connection between ATM/FDDI lines (4) and ATM/SDH lines (2). However, it should be noted that the converter (3) support both Public and Private Networks, LAN, MAN and WAN networks. Besides, in the international standard for Cell Relay, it is possible to multiplex voice, video and data for the transmission from one workstation to another. Therefore, the converter (3) should not be limited to the described environment, it may be implemented in other environments using ATM/FDDI and ATM/SDH protocols at different high speed transmission specified by the associated internal clocks.

### HARDWARE DESCRIPTION OF THE CONVERTER

Figure 3 describes the block diagram for the conversion of the ATM/FDDI protocol to the ATM/SDH protocol.

All along the description, the term "data ATM cell" means that the cell contains data whereas the term "idle ATM cell" means that the header contains special code which indicates that no data is contained in the cell; the term "ATM cell" meaning therefore that the cell may be idle or contain data.

A FDDI receiver (110), also called TAXI receiver where TAXI stands for Transparent Asynchronous Transmitter-Receiver Interface, receives a data ATM cell. It detects the start_of_cell of the received data ATM cells before it reads the data bytes at the frequency equal to the FDDI receiver bit frequency divided by eight (in the present case the frequency is 12.5 MHz); and finally it writes the data bytes into FIFO buffer (210) at the same frequency. A counter (310) also called busy counter is incremented each time a data ATM cell is stored in the FIFO buffer.

As long as the counter (310) is not equal to 0, the data ATM cell is transmitted byte by byte from the FIFO buffer (210) to a SDH Transmitter (510) on its request at the SDH transmitter frequency divided by eight (in the present case the frequency is 19.44 MHz). The counter (310) is decremented each time a data ATM cell is transmitted.

When the counter (310) is equal to 0 then empty ATM cells are generated and transmitted to the SDH Transmitter on its request. Therefore, it is required to have a multiplexer (230) which enables to multiplex data cells and empty cells and to transmit them to the SDH transmitter with respect to the SDH link speed transmission.

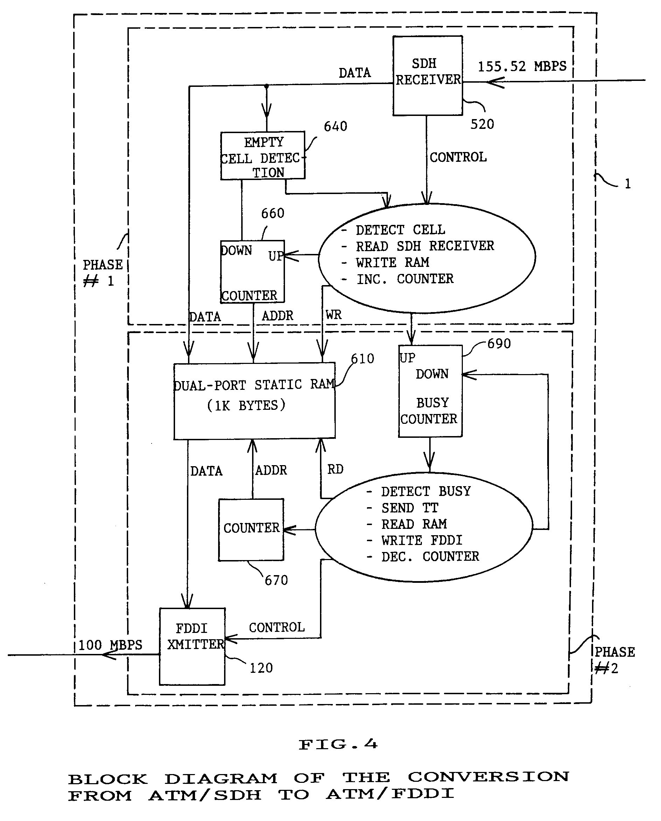

Figure 4 describes the block diagram for the conversion of the ATM/SDH protocol to ATM/FDDI protocol.

The ATM cells received by a SDH receiver (520) are stored in a dual port memory (610). In parallel, the header of the received ATM cell is decoded by an empty cell detection circuit (640).

If the incoming ATM cell is an empty cell, the circuit (640) prevents the storage of the 48 bytes left of the ATM cell in the dual port memory (610) and resets the addressing pointer of said memory (610) to its previous value.

If the incoming ATM cell is a data cell, the 48 bytes left are stored in the memory (610) and a counter (690) also called a busy counter is incremented.

As long as the busy counter (630) is not equal to 0, one data cell is transmitted from the memory to a FDDI transmitter, also called a TAXI transmitter, preceded by a start_of_frame byte delimiter 'TT'. At the end of the data cell transmission, the busy counter (630) is decremented.

If the busy counter is equal to 0, which means that no data ATM cell has been received from the SDH link, then the FDDI transmitter (120) sends idle byte 'JK' on the FDDI link;

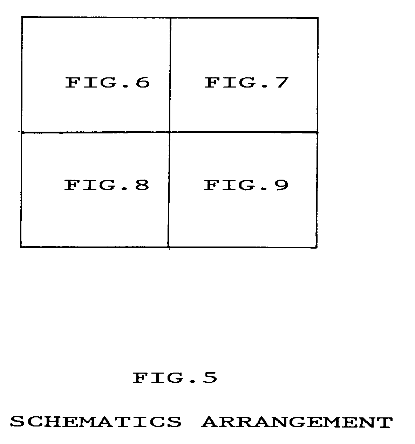

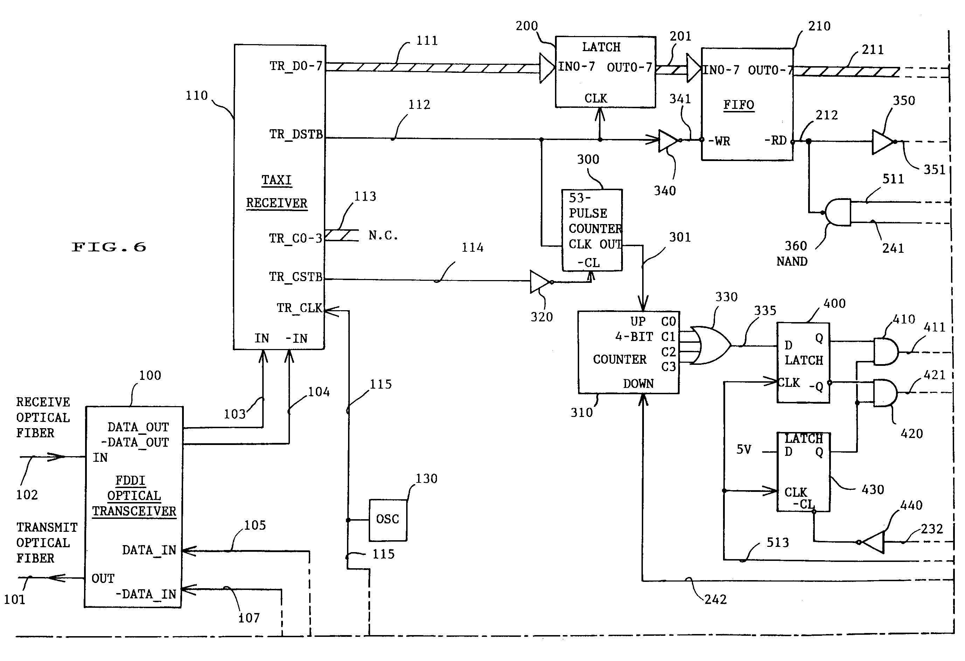

Figures 6 to 9 illustrates the hardware implementation of the circuits according to the present invention. The figures are arranged as is shown in figure 5.

The FDDI communication lines are composed of two pairs made of fiber optics in the preferred embodiment, a transmit pair (101) and a receive pair (102). It should be kept in mind that it is not necessary to use fiber optics to implement the present invention. The transmit optical fiber (101) enables to transmit signals from an output OUT pin of a FDDI optical transceiver (100) to a workstation, a router or whatsoever (5); whereas the receive optical fiber (102) receives signals from a workstation or any other communication device (5) on its input pin IN. The FDDI optical transceiver (100) has output ECL leads (emitter coupled logic), pin DATA_OUT and pin -DATA_OUT which are respectively connected to input ECL leads, pin IN and -IN of the TAXI receiver (110), where TAXI stands for Transparent Asynchronous Xmitter-Receiver Interface. In the same ways, the FFDI optical transceiver (100) has also input ECL leads, pin DATA_IN and -DATA_IN which are respectively connected to output ECL leads, pin OUT and -OUT of the TAXI transmitter (120).

The TAXI receiver (110) is connected to a data bus (111) by its pin TR_D0-7 and through which it transmits ATM cells to a latch (200) of the type 74ALS273 on its input IN0-7. It generates a control signal from its pin TR_DSTB to input clock pins, referred as CLK of latch (200), of a counter (300) and to an input pin of an inverter (340) through lead (112). It also generates a control signal from its pin TR_CSTB to an input pin of an inverter (320) through lead (114). The TAXI receiver (110) receives clock signal on its pin TR_CLK from an oscillator (130) which provides through lead (115) a free-running clock at a determined frequency depending on the transmission speed on the FDDI link, in this example at 12.5 MHz. This oscillator also transmits the free-running clock signal to the TAXI transmitter (120) on its pin CLK.

It should be kept in mind that the sign minus '-' before a signal means that the signal is activated when it is at its down level and deactivated when it is at its high level. For example, the operation of write is requested when the signal -WR is at its down level.

Referring back to figure 6, the latch (200) outputs ATM cells from its output OUT0-7 to an input IN0-7 of a buffer FIFO (210) through a data bus (201). The buffer FIFO (210) has a write input -WR connected to the output of the inverter (340) through lead (341), and it has also a read output -RD connected to an output of a 2-input NAND gate (360) and to an input of an inverter (350) though lead (212). The buffer FIFO (210) outputs ATM cells from its output OUT0-7 to an input IN0-7 of a latch (220) through a data bus (211). The latch (220) is of the type 74ALS373 and has an input strobe lead STB connected to an output of the inverter (350) through lead (351). The ATM cells are output from an output OUT0-7 of the latch (220) to an input A0-7 of a multiplexer (230) through the data bus (221). This latter provides two input 9-bit ports and one output 9-bit port. An output bus D0-7 of the multiplexer (230) is connected to an input of a data bus input S_XD0-7 of a SDH Transmitter (510) through a data bus (231). In the preferred embodiment of the present invention, the SDH Transmitter is a SODES chip provided by Siemens or a MB580 chip by Fujitsu. The multiplexer (230) has also another data bus input B0-7 which is connected to an output E_D0-7 of a state_machine_2 (250) through a data bus (251) and through which idle cells are transmitted. Therefore, the multiplexer (230) multiplexes the data ATM cells received from the latch (200) with the idle cells received from the state_machine_2 according with respect to control signals generated by said state_machine_2 and a state_machine_1 (240) which will be described more in details later on.

The counter (300) counts the 53 pulses which correspond to the 53 bytes of the ATM cell to be transmitted to the SDH transmitter. It outputs a signal on lead (301) to an input referred as pin UP of a 4-bit up/down counter (310). The counter may be reset thanks to its clear input which is connected to an output of the inverter (320).

The 4-bit counter (310) has another input pin referred as DOWN which is connected to an output D_Cell of state_machine_1 (240) through lead (242), said output being also connected to an input A_Cell of the multiplexer (230). The second port of the multiplexer has an input B_Cell which is connected to an output E_Cell of state_machine_2 (250) through lead (252) and the multiplexer (230) outputs a control signal start_of_cell from its output CELL to the SDH Transmitter (510) and to an input of an inverter (440) through lead (232).

The 4-bit counter (310) outputs four bits signals (C0-C3) to four input leads of a 4-input OR gate (330) whose output is connected to a data input lead D of a latch (400) of the type 74ALS74 through lead (335). The latch (400) has 2 outputs Q and -Q respectively connected to input leads of 2-input AND gates (410) and (420), whereas the other input leads are both connected to an output Q of a latch (430) also of the type 74ALS74. The latch (430) has also a data input lead D which is connected to +5V and a clear input CL connected to an output of the inverter (440). The 2-input AND gates (410) and (420) output signals respectively to a data input D_START of state_machine_1 (240) and to an empty input E_START of state_machine_2 (250) through leads (411) and (421). Both latches (400) and (430) receive on their pins CLK a cell request signal from an output clock pin of the SDH Transmitter (510), referred as S_XCELL_RQ, through lead (513). The SDH Transmitter (510) also outputs through lead (511) clock reference signals from its pin S_XCLK_REF to an input of an inverter (370), to the clock input pins of state_machine_1 (240) and state_machine_2 (250), to an input of the 2-input NAND gate (360) and to an input of an inverter (370) whose output is connected to an input S_XCLK of SDH Transmitter (510) through lead (512). State_machine_1 (240) outputs through lead (241) a select port signal to an input A/-B of the multiplexer (230) to select which of port A or B is to receive data ATM cell from latch (220) or idle cell from state_machine_2 (250). This select port signal is also transmitted to the NAND gate (360).

The SDH communication line is composed of two pairs made of fiber optic, the transmit pair (506) and the receive pair (507). The transmit optical fiber is connected to an output pin OUT of a SDH optical transceiver (500), whereas the receive optical fiber is connected to its input IN. The SDH optical transceiver (500) has two ECL output pins (DATA_OUT/-DATA_OUT and DATA_IN/-DATA_IN) which are respectively connected to ECL input pins IN/-IN of a SDH receiver (520) and to ECL output pins OUT/-OUT of the SDH Transmitter (510) through leads (503, 504, 502 and 501). In the preferred embodiment of the present invention, the SDH receiver (520) is also a SODES chip provided by Siemens or a MB581 by Fijitsu. Both, the SDH receiver and transmitter (510,520) receive on their clock input pins CLK a free-running clock signal at a frequency, depending on the transmission speed on the SDH lines and determined by an oscillator (530) through lead (515). In this example, the frequency is 19.44 MHz.

The SDH receiver (520) outputs data ATM cells on a data bus (521) from its pin SR_D0-7 to an input bus IN0-7 of a latch (600) of the type 74ALS273 and to an input bus D0-7 of a state_machine_3 (640). The SDH receiver (520) also outputs control signals: a cell_strobe signal from its output SR_CELL to an input of an inverter (740) and to an input pin SR_CELL of state_machine_3 through lead (523); and also two control signals respectively from its outputs SR_CLK and SR_DEN to a 2-input AND gate (700) through leads (522,524).

Latch (600) outputs ATM cells from its output bus OUT0-7 to an input data bus R_D0-7 of a dual port memory (610), through bus (601), this latter outputs the cells from its output bus L_D07 to an input bus IN0-7 of a latch (620) of the type 74ALS273 through data bus (611). The cells are then transmitted from the latch (620) to an input bus IN0-7 of a latch (630) of the type 74ALS273 through a data bus (625). Afterwards, the cells are transmitted to an input bus TX_D0-7 of the TAXI Transmitter (120) through a data bus (631). The transmission of the cells from the SDH Receiver to the TAXI Transmitter are performed with respect to control signals generated by different components which will be described latter on.

The AND gate (700) has an output which is connected to an input of an inverter (720), to an input of a 2-input AND gate (710), and to clock input pins CLK of latch (600), of state_machine_3 (640) and of a counter (680) which counts the 52 pulses corresponding to the first 52 bytes of the ATM cell. This counter (680) may be reset thanks to its clear input -CL connected to an output of the inverter (740). This counter has an output OUT connected to an input of a 2-input NOR gate (750) whose output is connected to an input UP of a 4-bit up/down counter (690) through lead (751).

The state_machine_3 (640) outputs 2 control signals. It generates a first control signal from its output E_CELL_DET to the other input of the 2-input NOR gate (750), to an input of a 2-input NOR gate (730) and to a select input Down/-Up of a counter (660) through lead (641). The second control signal is generated from its output STP_CLK to the other input of said 2-input AND gate (710), through lead (642), whose output is connected to a clock input CLK of the counter (660). Both control signals enable the counter (660) to output 9 bits from its output C0-8 to an address input R_A0-8 of the dual port memory (610) through an address bus (661). The inverter (720) also outputs a signal to the other input of the 2-input OR gate (730) which in turn outputs a signal to an input - R_WR of the dual port memory (610) whose chip select inputs - R_CS and -L_CS are connected to the ground in this example of implementation.

The 4-bit counter (690) output four bits (C0-C3) to a 4-input OR gate (760) whose output is connected to an input CNT_BUSY of a state_machine_4 (650) through lead (761). This state_machine_4 outputs three control signals, among which a signal generated from its output DOWN_CNT to the other input Down of the 4-bit up/down counter (690) through lead (652). A second control signal is generated from its output RAM_EN to an input of a 2-input AND gate (820) and to an input of a 2-input NAND gate (830) through lead (654). Finally, a third control signal is generated from its output XFER_EN to an input of a 2-input AND gate (810) through lead (810). Besides, state_machine_4 is also connected to a command bus input TX_C0-3 of the TAXI transmitter (120) through the bus (651). The TAXI Transmitter (120) outputs clock signal from its output TX_CLK to an input of an inverter (800) and to the other input of the 2-input AND gate (810) through lead (121) which in turn outputs a control signal to an input TX_STB of the TAXI Transmitter (120) through lead (811). Besides, the inverter (800) generated a signal to clock inputs CLK of state_machine_4 (650) and latch (630), and also to one of the inputs of the 2-input AND gate (820) and the 2-input NAND gate (830) which output clock signals respectively to inputs CLK of a counter (670) through lead (821) and of latch (620) through lead (831). The clock signal generated by the NAND gate (830) is also received by an input L_RD of the dual port memory (610) for a read operation. In the same ways, counter (670) outputs 9-bit signals to an input L_A0-8 of the dual port memory through a bus (671).

### FUNCTIONAL DESCRIPTION OF THE CONVERTER

In order to understand how the different components described in the hardware description function, it is necessary to refer to figures 6 to 9 and also to the timing diagrams of the corresponding figures. Additionally, the basic operations of the state machines 1, 2, 3 and 4 illustrated in details in the corresponding figures enable to make clearer the understanding of the present invention.

The functional description of the present invention can be divided in two parts, firstly the conversion of the ATM/FDDI protocol to the ATM/SDH protocol and secondly the conversion of the ATM/SDH protocol to the ATM/FDDI protocol.

### ATM/FDDI PROTOCOL TO ATM/SDH PROTOCOL CONVERSION

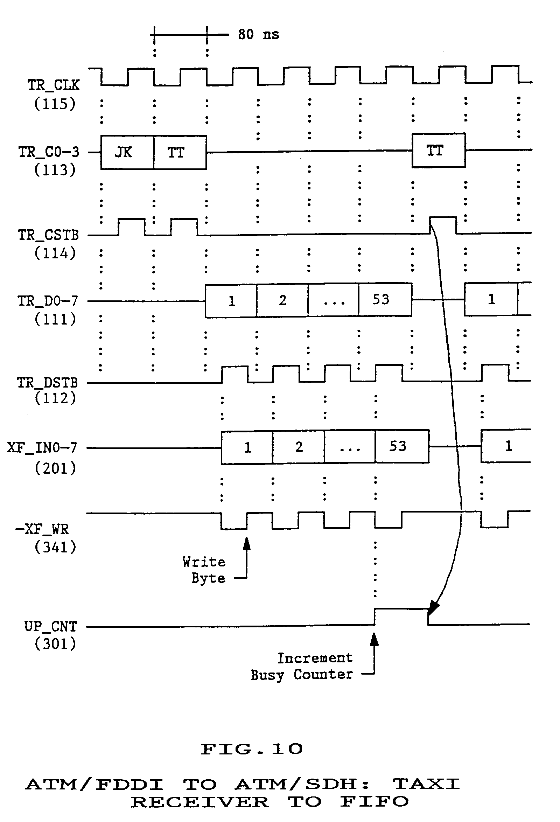

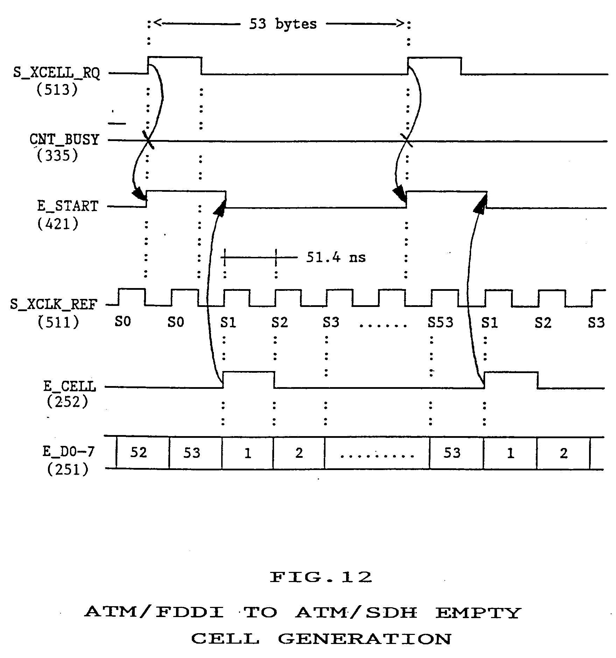

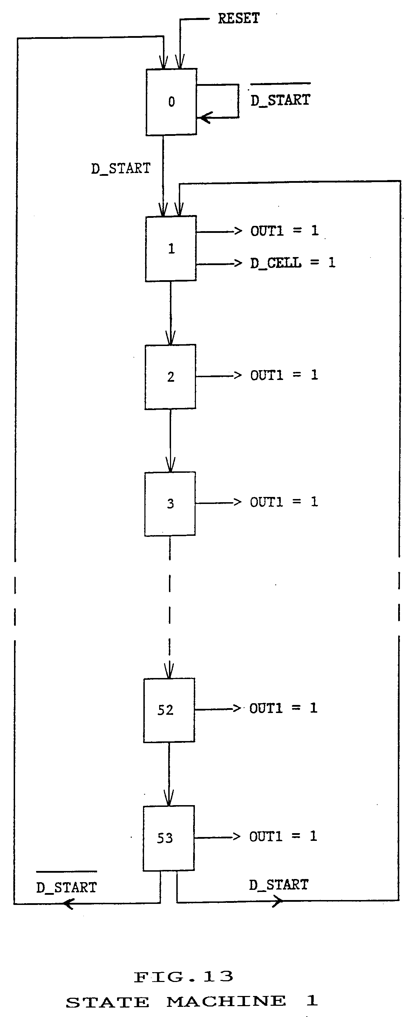

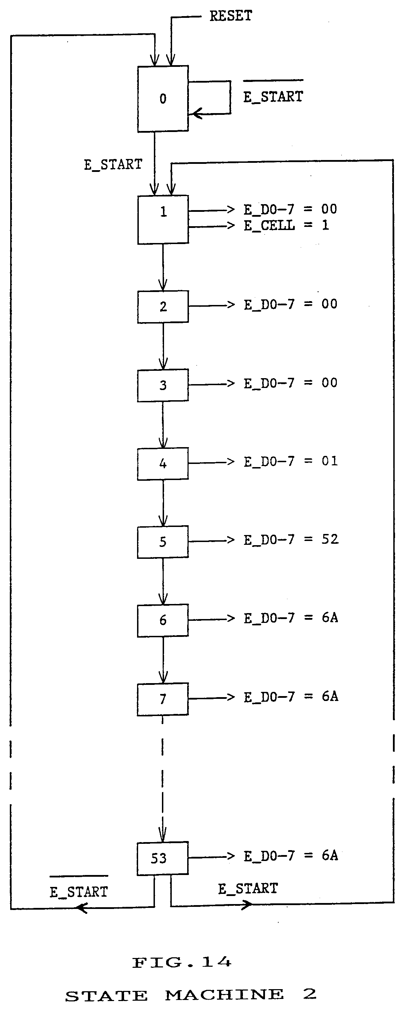

The ATM cells in the FDDI format are received at the speed of 100 Mbps in the converter which converts those signals and transmits them according to the SDH format at the speed of 155.52 Mbps. These operations are described in association with the timing diagrams shown in figures 10 to 12. Moreover, the description of the basic operations of state machines 1 and 2 in figures 13 and 14 enables to understand how the control signals are generated therefrom.

The overview of this transmission path from the FDDI receiver to the SDH transmitter is described in figure 3. From this figure, it appears that there are 3 phases. The first phase relates to the transmission of ATM cells from the FDDI receiver (110) to the FIFO buffer (210), the second phase relates to the transmission of those ATM cells to the SDH Transmitter (510) through the multiplexer (230), and finally the third phase relates to the transmission of idle ATM cells from an empty cell generator (250) to the SDH Transmitter wherein the idle ATM cells are to be multiplexed with the data ATM cells.

### PHASE #1. (This phase is described in connection with figures 6 and 10).

The principle of the conversion is based on the reception of frames on the FDDI link. These frames are received from the network lines by TAXI receiver (110) through FDDI Optical transceiver (100). The TAXI receiver detects the start of frame byte delimiter ('TT' byte), discards it and provides the data ATM cell on its parallel data bus TR-D07 (111) and generates a control signal from its output TR-DSTB on lead (112) to the 53-pulse counter (300) which increments the 4-bit counter (310). During that time, each ATM cell is stored in the FIFO buffer (210). The output of the counter (310) is transmitted to the OR gate (330) whose output signal referred as CNT_BUSY is generated on lead (335) as shown in the associated timing diagram. When an ATM cell is transmitted from the FIFO buffer on the SDH link, which will be detailed in the description of phase #2, the 4-bit counter (310) is decremented until it reaches the value zero which means that no data ATM are left in the FIFO buffer and that ATM idle cells are to be transmitted or are transmitted on the SDH link.

Referring to this figure 10, the TAXI receiver (110) operates according two independent modes: the data mode and the command mode which is the default mode. In the command mode, the TAXI receiver (110) monitors the receive network lines through FDDI optical transceiver (100) on its ECL data input bus (IN/-IN). When the TAXI receiver (110) detects a command byte such as the 'JK' byte (meaning idle byte) or the 'TT' byte (meaning Start_of_Frame byte delimiter), it activates the command_strobe control signal on lead (114) and transmits on the command_bus output TR_C0-3 (113) the command detected. The activation of the command_strobe control signal through lead (114) enables to reset counter (300) which counts the 53 bytes of the ATM cell, i.e. the length of the ATM cell to generate a cell_reception signal on lead (301). The command mode is switched to the data mode each time the start_of_frame delimiter 'TT' is detected by the TAXI Receiver (110). The latter activates then the data_strobe control signal through lead (112) and is ready to transmit the data bytes received on data bus (111) from its output TR_D0-7. This operation is reiterated until an idle byte 'JK' is detected by the TAXI Receiver (110).

The data bytes to be transmitted by the TAXI Receiver (110) is latched on the rising edge of the data_strobe control signal issued on its pin TR_DSTR which also enables to increment counter (300) whose function is to count the 53 bytes of an ATM cell. Besides, this data_strobe control signal enables inverter (340) to output a write signal to the write input -WR of the FIFO buffer (210) which receives in the same time the data bytes from latch (200). The data bytes are then stored in this FIFO buffer until the entire 53 bytes of the ATM cell are received. On the reception of the 53rd byte, the counter (300) generates a signal from its output to the counter (310) to inform that an 53 bytes ATM cell is ready to be transmitted. This output is connected to the UP pin of counter (310) which is then incremented. This counter may also be called a busy counter as is mentioned in figure 3, whose function is to inform the SDH Transmitter (510) that a data ATM cell is ready to be transmitted by generating a 4-bit signal to the 4-bit OR gate (330) which in turn generates a signal CNT_BUSY on lead (335) to latch (400).

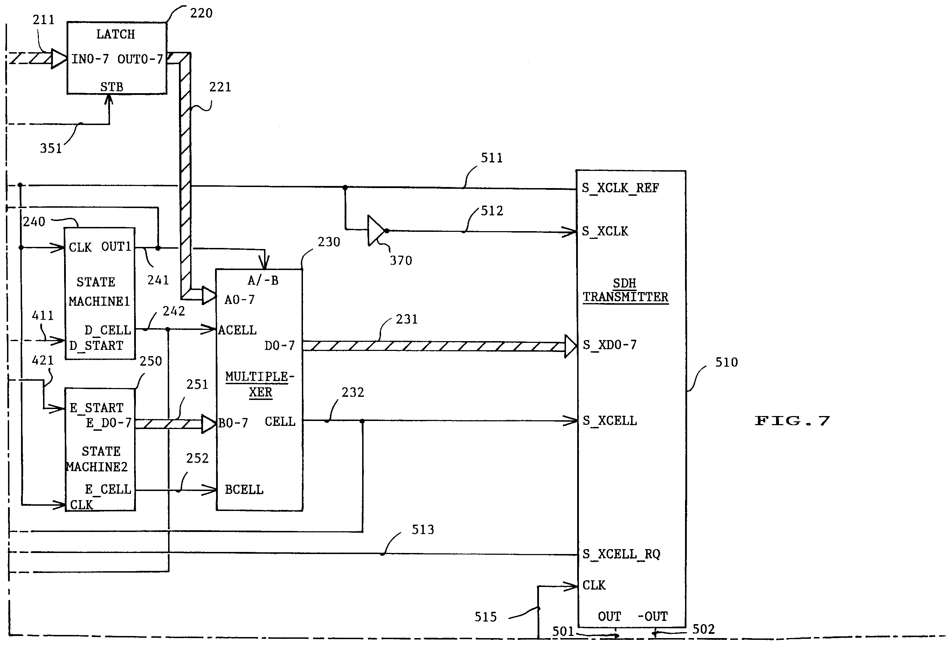

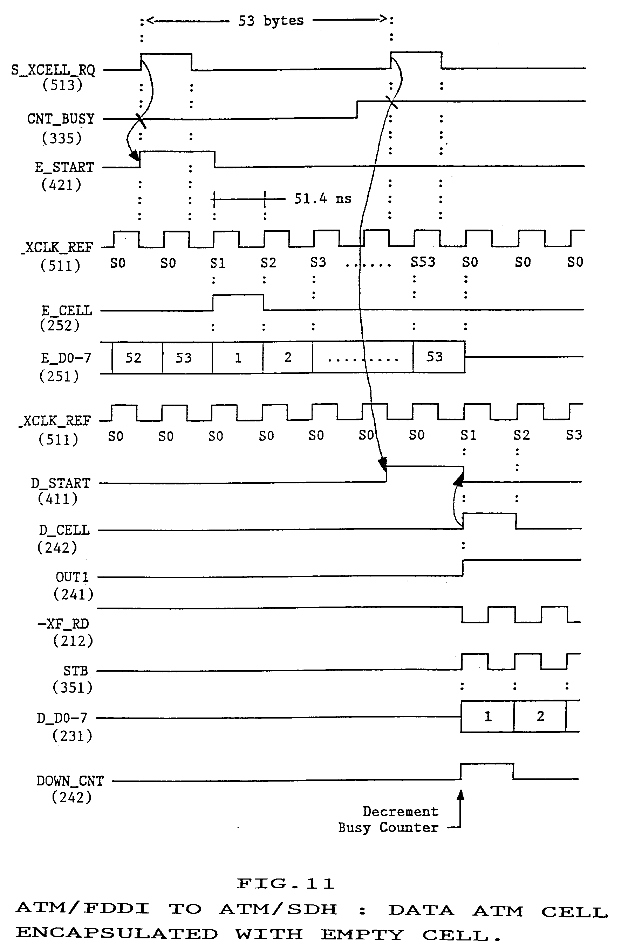

### PHASE #2. (This phase is described in connection with figures 7 and 11).

On the assumption that the FIFO buffer (210) has stored a data ATM cell and the counter (310) is equal to 1, the SDH Transmitter (510) transmits then the data ATM cell after the end of the transmission of the current idle ATM cell. The generation and the transmission of idle cells will be described in phase #3.

Each time the SDH Transmitter (510) is ready to receive ATM cell, it sends a cell_request signal from its output pin S_XCELL_RQ on lead (513) to latches (400, 430) to receive either a data ATM cell or an idle ATM cell.

In the present case, on the rising edge of this signal, latch (400) reflects the high level output signal received of counter (310) through the 4-bit OR gate (330), and in the same time, the output Q of latch (430) is switched to high level. Consequently, the AND gate (410) is enabled and transmits a high level signal to the input D_START of state_machine_1 (240), whereas AND gate (420) is enabled and transmit a low level signal to the input E_START of state_machine_2 (250). This state machine generates in turn a one_clock width pulse on its output D_CELL during the first byte of the data ATM cell and activates a 53_clock width pulse on its output OUT1 through lead (241). On the rising edge of the one_clock pulse, the counter (310) is decremented whereas the 53_clock pulse selects port A of the multiplexer (230) and enables the NAND gate (360). Afterwards, the multiplexer (230) is switched to its port A and the clock signal generated from the SDH Transmitter (510) to the NAND gate (360) enables this latter to generate a read signal to the FIFO buffer (210) and to the strobe input of the latch (220) through the inverter (350).

Once the FIFO buffer (210) receives the read signal through lead (212), it transmits a byte on the data bus (211) during each read pulse signal. Each byte is latched into latch (220) on the falling edge of its strobe control signal received on lead (351). As the strobe control signal is the inverted of the read signal generated by the NAND gate (360), the byte is latched into latch (220) on the rising edge of the read signal.

As port A of the multiplexer (230) is selected by the 53 clock width pulse signal generated by state_machine_1 (240) on lead (241), the data bytes of the ATM cell stored in the FIFO buffer (210) are transmitted from Latch (220) to this port A on data bus (221) and then to SDH Transmitter (510) on data bus (231). The SDH Transmitter also receives on lead (232) the start_of_cell identification signal generated by state_machine_1 (240).

Once the transmission of the 53 bytes of the data ATM cell has finished, state_machine_1 (240) deactivates the 53 clock width signal on lead (241), which in turn resets the read signal generated by NAND gate (360) to the FIFO buffer (210).

### PHASE #3. (This phase is described in connection with figures 6, 7 and 12).

On the assumption that no data ATM cell has been received on the FDDI link, the FIFO buffer (210) is empty and the counter (310) is also equal to 0. Therefore, empty ATM cells are to be generated and transmitted on the SDH link.

Once, the SDH Transmitter (510) has sent a cell-request signal on lead (513) to both latches (400, 430) which is in the present case, the rising edge of this signal, the output Q of latch (400) reflects the low level of the output of counter (310) through OR gate (330), whereas the output Q of latch (430) switches to high level. Therefore, AND gate (410) is enabled and transmits then a low level signal to state_machine_1 (240) through lead (411). In the same ways, AND gate (420) is also enabled and transmits a high level signal to state_machine_2 (250).

State_machine_2 (250) generates the 53 bytes of an empty ATM cell on data bus (251) and a one clock width pulse on lead (252) from its output pin E_CELL during the first byte of the cell. This one clock width pulse informs the SDH Transmitter of the beginning of the idle ATM cell. Both, bus (251) and lead (252) are connected to port B of the multiplexer (230) which is selected by default. It should be noticed that the port selection is controlled by state_machine_1 which is not enabled during the transmission of idle ATM cells.

Therefore, the SDH Transmitter (510) receives the 53 bytes of the idle ATM cell on its input S_XD0-7 through data bus (231) and the start_of_cell identification on its input S_XCELL through lead (232). Besides, the start_of_cell signal resets latch (430) through inverter (430).

Whatever the SDH Transmitter receives from the multiplexer be it a data ATM cell or an idle ATM cell, it is devised to encapsulate the cells with the POH and SOH fields in order to transmit in a byte stream the 9 by 9 matrixes on the SDH/ATM link. In the same ways, the SDH receiver is also devised to detect the POH and SOH fields and to discard them before sending the data bytes of the cell to the rest of the logic.

The basic operations of state_machine_2 (250) which is an empty ATM cell generator is described in details in figure 14 latter on.

Figure 13 shows the implementation of state_machine_1 (240) according to the present invention. This state machine has two inputs CLK and D_START which receive respectively the clock reference signal S_XCLK_REF from the SDH transmitter on lead (511) and the data input signal D_START on lead (411). It activates a first signal of one clock width pulse from its output D_CELL to the multiplexer to inform the SDH transmitter of the beginning of the data ATM cell and a second signal from its output pin OUT1 to select which port A or B of the multiplexer has to receive the 53 bytes of the data ATM cell. As the transmission is done byte by byte; the state machine comprises 54 states (state 0 to state 53).

The state machine may be reset to state 0 and is kept at this state as long as the data input signal D_START on lead (411) is at low level. When the latter signal is activated, the state machine goes to state 1 and sets its two outputs D_CELL and OUT1 to 1. It passes then successively from state 1 to state 53 and at each state it keeps its output signal OUT1 at high level. At state 53, if its data input signal D_START is kept at high level, which means that the data are to be transmitted again, the state machine goes to state 1; otherwise, which means that no data bytes are to be transmitted again, the state machine goes to state 0.

Figure 14 shows the implementation of state_machine_2 (250) according to the present invention. This state machine has two inputs CLK and E_START which receive respectively the clock reference signal S_XCLK_REF from the SDH transmitter on lead (511) and the data input signal D_START on lead (411); it should be kept in mind that in this case, the data input simply means idle data input which corresponds to the idle ATM cells. It activates a first signal of one clock width pulse from its output E_CELL to the multiplexer to inform the SDH transmitter of the beginning of the idle ATM cell and generates 53 bytes of idle ATM cell from its output bus E_DO-7 to the multiplexer (230). As the transmission is done byte by byte; the state machine comprises 54 states (state 0 to state 53).

The state machine may be reset to state 0 and is kept at this state as long as the idle or empty input signal E_START on lead (421) is at low level. When the latter signal is activated, the state machine goes to state 1 and sets its output E_CELL to 1 and generates a first byte which corresponds to the first byte of the header of idle ATM cell. It passes then successively from state 1 to state 53 and at each state it generates the bytes which corresponds to the identification of idle ATM cell. At state 53, if its idle input signal E_START is kept at high level, which means that the bytes of idle ATM cell are to be transmitted again, the state machine goes to state 1; otherwise, which means that data bytes are to be transmitted again, the state machine goes to state 0.

Therefore, the combination of the three phases enables the conversion of data ATM cells from the FDDI format to the SDH format and the generation of idle ATM cells, whereby both ATM cells are transmitted in byte stream on the SDH link.

Conversely, the conversion of the ATM cells received on SDH lines into the FDDI format requires a different system and method which will be described in this second part.

### ATM/SDH PROTOCOL TO ATM/FDDI PROTOCOL CONVERSION

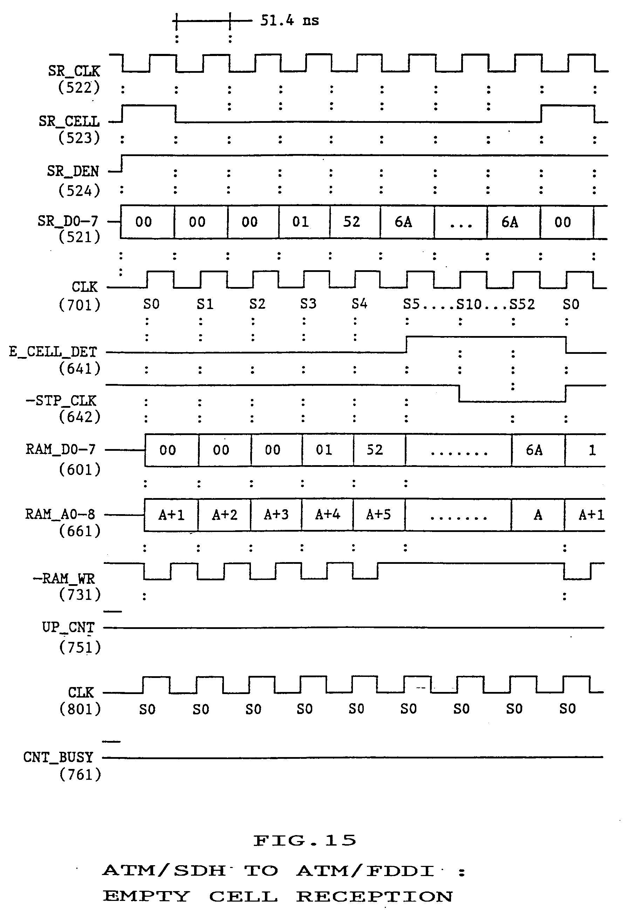

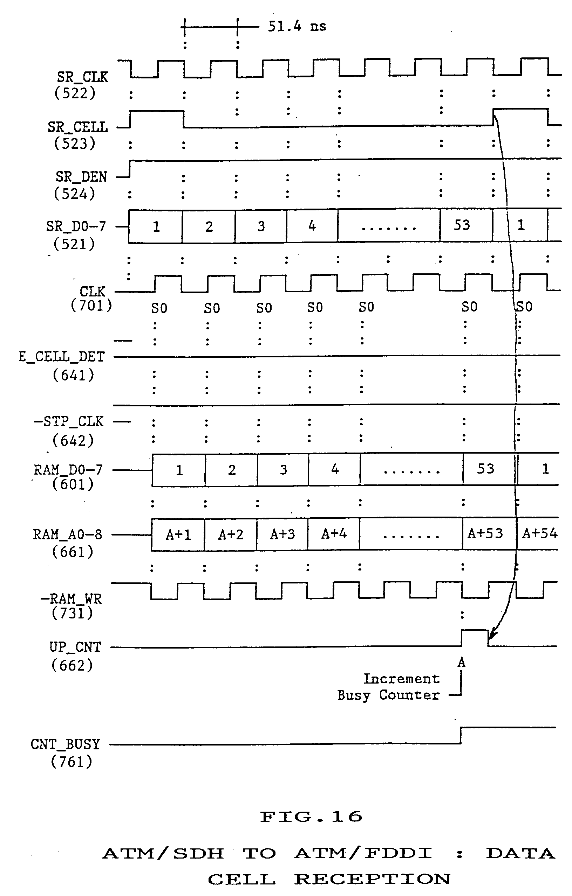

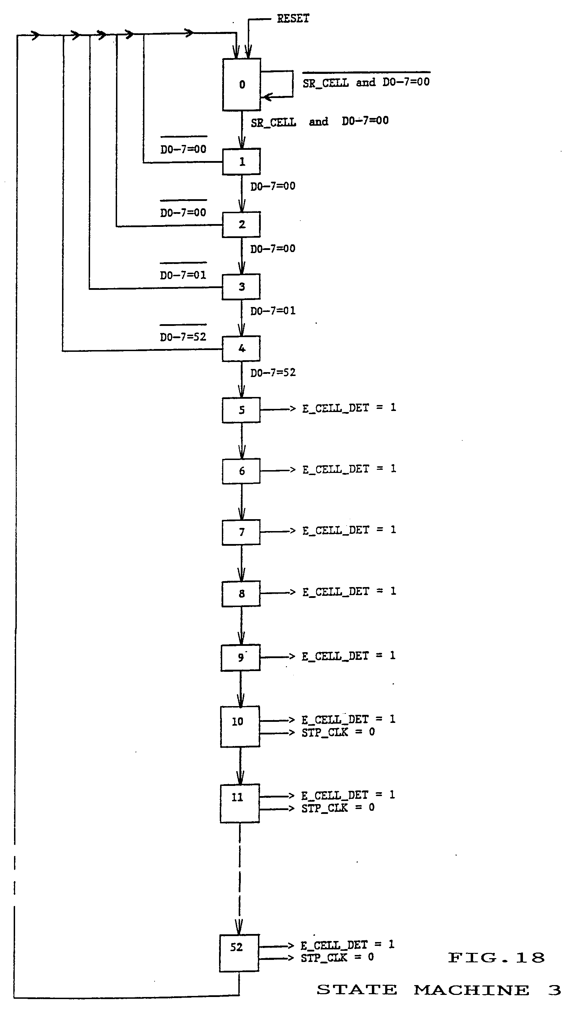

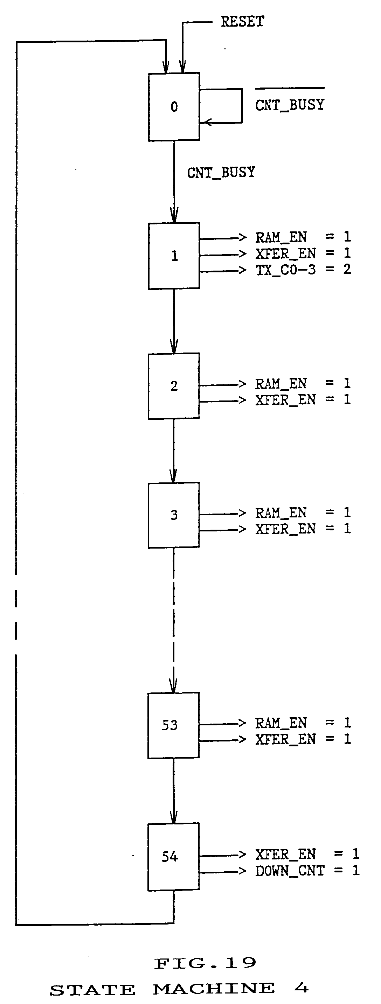

The ATM cells in the SDH format are received at the speed of 155.52 Mbps by the converter which converts those cells and transmits them according to the FDDI format at the speed of 100 Mbps. These operations are described in association with the timing diagrams of figures 15 to 17. And the description of the basic operations of state_machines 3 and 4 in figures 18 and 19 will help to understand how the control signals are generated therefrom.

This conversion system and method are based on the fact that the ATM cells received on the SDH link can be either data ATM cells or empty ATM cells. The state_machine_3 monitors the incoming cells and identifies the type of the cells in order to discard the idle ATM cells. The data ATM cells are then stored in the dual port memory (610) and counter (690) is incremented. When the value of the output of counter (690) referred as CNT_BUSY on lead (761) is different from zero, a data cell is transmitted from the dual port memory to the FDDI transmitter under the control of the TAXI transmitter which generates a start_of_frame delimiter 'TT' byte before transmitting one data ATM cell. Once the data ATM cell is transmitted, counter (690) decremented. The transfer of the data ATM cells between the dual port memory and the FDDI transmitter is reiterated until counter (690) is equal to zero.

Referring back to figure 4, it shows the overview of this transmission path, and it appears that there are 2 phases. The first phase relates to the transmission of ATM cells from the SDH receiver (520) to the dual port memory (610) and to the detection of the contents of the cells. The second phase relates to the transmission of the data ATM cells to the FDDI transmitter (120) whereas the idle ATM cells are discarded.

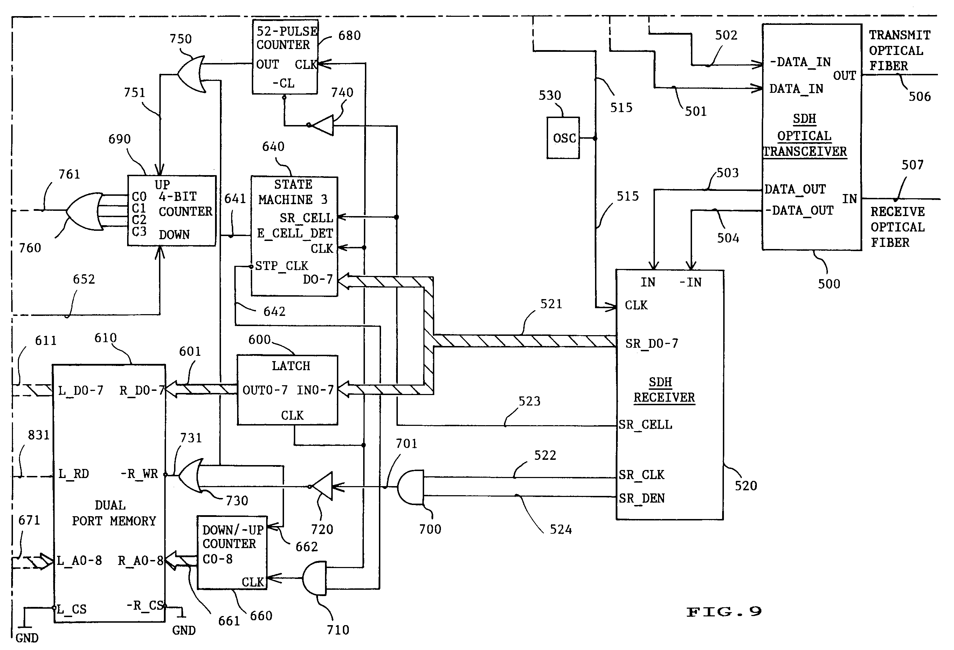

### PHASE #1. (This phase is described in connection with figures 9, 15 and 16).

The ATM cells are received by the SDH receiver (520) one byte per clock pulse generated by the SDH receiver on its output SR_CLK through lead (522). The SDH receiver also outputs a cell_detect signal of one clock width pulse on its output SR_CELL through lead (523) during the first byte of the cell to inform of the beginning of the cell. Besides, the SDH receiver activates a data_enable signal of one clock pulse on its pin SR_DEN through lead (524) when the data byte of ATM cell received corresponding to the clock pulse is valid. It should kept in mind the transmission is also performed byte by byte.

At the reception of an ATM cell, the SDH receiver (520) activates the data_enable signal, the cell_detect signal and transmits the first byte received on the data bus (521). The activation of the data_enable signal enables AND gate (700) which also receives the clock signal SR_CLK of the SDH receiver to transmits the receive clock signal to the entire logic, i.e. counter (660), dual port memory (610), latch (600), state_machine_3 (640), counter (680) and counter (690). On the other hand, the activation of the cell_detect signal resets the counter (680) through inverter (740). This latter counter (680) counts the 53 bytes of the ATM cell and it generates a signal at the last byte.

In parallel, each byte is transmitted to both state_machine_3 (640) and latch (600) on data bus (521). The first byte is latched into latch (600) on the rising edge of the clock signal SR_CLK on lead (522) which also increments counter (680) and counter (660) through AND gate (710). Besides, counter (660) receives a stop_clock signal on lead (642) from pin -STP_CLK of state_machine_3 (640) which is at high level by default. Counter (660) has an input DOWN/-UP which receives an empty_cell signal on lead (641) from pin E_CELL_DET of state_machine_3. The Down/-Up pin means that if a low level signal is received then the counter is set to its increment mode whereas a high level signal set the counter to its decrement mode. By default the counter is set to its increment mode. When an empty cell is detected, counter (660) is set to its decrement mode for 5 bytes to reset the counter to its previous start_value 5 clock pulses before, which corresponds to the number of bytes of the header.

The dual port memory (610) has an address bus input R_A0-8 which is connected to counter (660) whose function enables to increment its write address pointer by one in order to store the first byte of the cell transmitted by latch (600) when a write signal is detected. The write signal is received by the memory on its pin -R_WR through inverter (720) and OR gate (730) which also receives the empty_cell signal maintained at low level by default as mentioned before. Therefore, the first byte is stored in the memory. It should be noticed that the writing and the reading operation in the dual port memory is done byte by byte.

This write operation is reiterated for the four bytes that follows, which enables then counter (660) to increment the write address pointer of the memory by 5. At the sixth byte, state_machine_3 (640) identifies whether the received ATM cell is empty or not.
* In case the received ATM cell is empty, state_machine_3 (640) activates its empty-cell signal for the 48 clock pulses corresponding to the 48 bytes left. The activation of the cell_detect signal disables OR gate (730) which in turn stops the activation of the write signal on lead (731) and switches then counter (660) to its decrement mode. Therefore, counter (660) is decremented by each rising edge of each clock signal received from AND gate (710). Five clock pulse latter, state_machine_3 (640) activates the stop_clock signal on lead (642) until the last byte of the empty cell, i.e. during the 43 bytes left. The activation of the stop_clock signal disables AND gate (710) which in turn stops generating the clock signals to counter (660). The value of counter (660) is then back to its previous start value, waiting for the reception of the next ATM cell. It should be noted that at this time, no bytes of the cell have been stored in the dual port memory.
   On the reception of the 53rd byte of the idle ATM cell, counter (680) outputs a signal to inform the end of the idle ATM cell. This signal is generated to a 2-input NOR gate (750) which also receives the empty-cell signal of state_machine_3 (640). Therefore, NOR gate (750) is disabled and the counter (690) is not incremented. Consequently, the CNT_BUSY signal generated on lead (761) by the OR gate (760) remains at its low level which is set by default.
* In case the received ATM cell contains data, state_machine_3 (640) does not activate any of its two control signals on leads (641) and (642). The empty-cell and the stop_clock signal remain at their idle states, i.e. the first at its low level and the latter at its high level. Therefore, the write operation is reiterated for each byte of the data ATM cell until the entire cell is stored in the dual port memory (610).

On the reception of the 53rd byte of the data ATM cell, counter (680) outputs a signal to inform the end of the data ATM cell as is in the case of idle ATM cell. The difference remains in that the 2-input NOR gate (750) does not receive an acive empty_cell signal from state_machine_3. Therefore, NOR gate (750) is enabled and the output of counter (680) is transmitted to counter (690) which is consequently incremented. A high level signal CNT_BUSY on lead (761) is then transmitted to state_machine_4 (650) through OR gate (760).

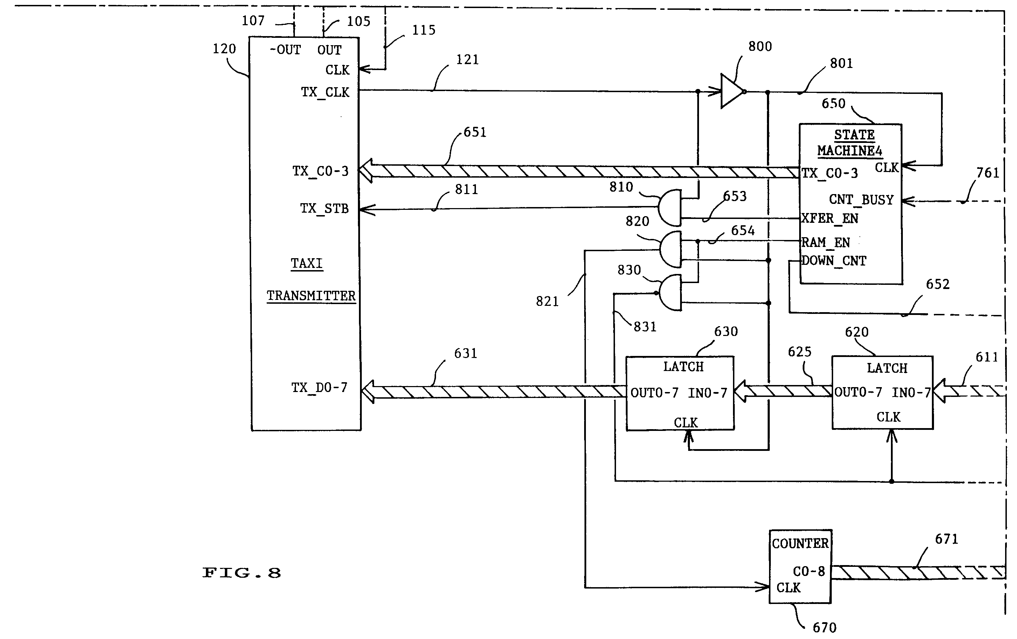

### PHASE #2. (This phase is described in connection with figures 8, 9 and 17).

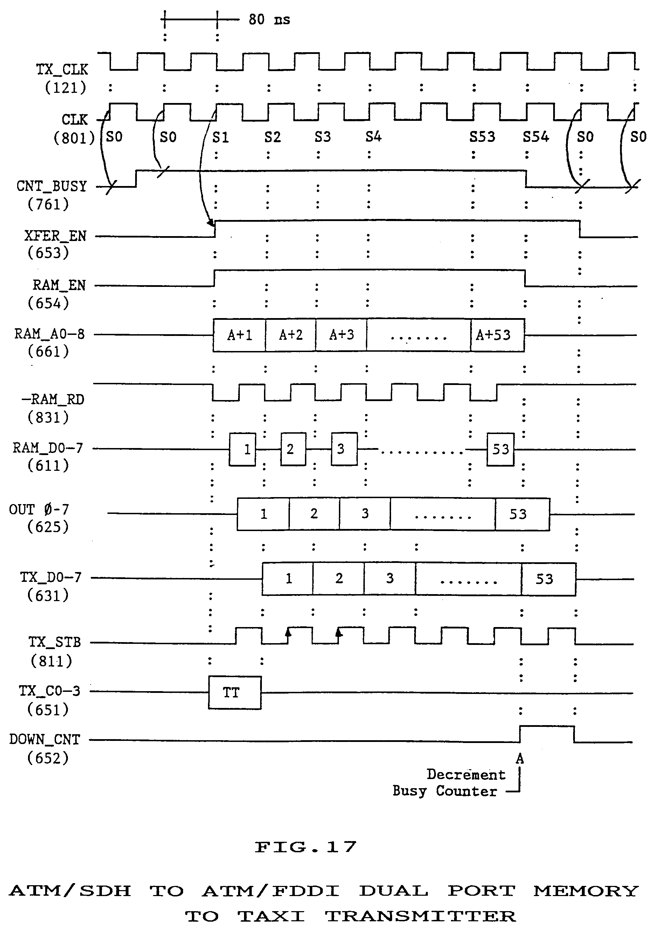

The data ATM cells are transmitted from the dual_port_memory (610) to the TAXI transmitter (120) according to the timing diagram in figure 17. Additionally, the description in figure 19 of state_machine_4 enables to understand how the control signals are generated therefrom.

When state_machine_4 (650) detects the activation of the CNT_BUSY signal on lead (761), it generates two control signals, a transfer_enable signal on lead (653) from its output XFER_EN and a memory_enable signal on lead (654) from its output RAM_EN respectively to AND gates (810) and (820). It transmits also an command signal which is a nibble (a four bits word) equal to 2, from it output TX_C0-3 on bus (651).

AND gate (810) receives clock signals from the TAXI transmitter (120) through lead (121) and is responsive to the transfer_enable signal to transmit strobe_clock signals through lead (811) to the TAXI transmitter (120). Therefore, during the first clock pulse, TAXI transmitter (120) is responsive to the first strobe_clock signal and the command signal on bus (651) to generate through the FDDI optical transceiver (100) a start_of_cell delimiter 'TT' byte which enables to identify the data ATM cell that follows.

The memory_enable signal on lead (654) enables AND gate (820) which transmits inverted clock signals of TAXI transmitter to the clock input CLK of counter (670). This latter outputs an address to the dual port memory (610) where the data bytes are to be read. Besides, the memory_enable signal also enables NAND gate (830) which transmits those inverted clock signals both to the clock input CLK of counter (620) and to an input of the dual port memory to start the read operation of the data bytes. This read signal is received by the input pin L_RD of the memory through lead (831). For each read pulse, the memory transmits the content of its read address pointer through data bus (611) to latch (620). The byte is latched on the rising edge of the read signal pulse. Besides, latch (630) is inserted between latch (620) and the TAXI transmitter in order to provide the timing to generate the start_of_cell byte delimiter 'TT' before generating the bytes of the data. The byte is latched into latch (630) on the falling edge of the read signal on lead (831), aferwards, the byte is transmitted to the TAXI transmitter on data bus (631) and stored on the rising edge of the strobe_clock signal on lead (811).

Figure 18 shows the implementation of state_machine_3 (640) according to the present invention. It purpose is to detect the reception of an idle ATM cell. This state machine has three inputs CLK, SR_CELL and D0_7 which receive respectively the clock signal through AND gate from the SDH receiver on lead (701), the cell_detect signal of one clock width pulse SR_CELL on lead (523) and the bytes of the ATM cell that are received by the SDH receiver. In case the received ATM cell is empty, identified by its header, it activates a first signal of 48_clock width pulse on its output E_CELL_DET on lead (641) to inform that the 48 bytes left are to be discarded. Besides, five clock pulse latter, it activates a second signal of 43_clock width pulse on its output pin - STP_CLK on lead (642) to set counter (660) to its previous value. As the transmission is done byte by byte; the state machine contain 53 states (state 0 to state 52).

The state machine is kept for 53 clock pulses in state 0 as long as the cell_detect signal of one clock width SR_CELL on lead (523) is at low level and the first byte of the received ATM cell is not equal to '00'. When both the cell_detect signal is activated and the first byte is equal to '00', the state machine goes to state 1. It returns to state 0 in case the second byte is not equal to '00', otherwise, the state machine goes to state 2. It passes then successively from state 2 to state 5 if the next three bytes correspond to the header of an idle ATM cell. At state 5, the state machine activates its empty_detect signal E_CELL_DET on lead (641) until state 52. Besides, at state 10, the state machine activates the stop_clock signal STP_CLK of 43 clock pulses on lead (642) to set the counter (660) to its previous value. Afterwards, the state machine goes to state 0.

Figure 19 shows the implementation of state_machine_4 (650) according to the present invention. This state machine has two inputs CLK and CNT_BUSY which receive respectively the clock reference signal from the output TX_CLK of the TAXI transmitter on lead (801) and the CNT_BUSY signal on lead (761). It outputs three control signals, the first signal being the transfer_enable signal of 54 clocks width from its output XFER_EN on lead (653), the second the memory_enable signal of 53 clocks width from its output RAM_EN on lead (654) and finally the count_down signal at the end of the cell transmission. It also generates the four bit command bus which is transmitted to the input bus TX_C0-3 of the TAXI transmitter for the generation of the start_of_frame bytes delimiter 'TT'. The state_machine_4 comprises 55 states (state 0 to state 54).

The state machine is kept at state 0 as long as the CNT_BUSY signal on lead (652) is at low level. When the latter signal is activated, the state machine goes to state 1 and sets its outputs RAM_EN and XFER_EN to 1 and generates the command bus for one clock pulse before the TAXI transmitter receives the bytes of the data ATM cell. It passes then successively from state 1 to state 53 and at each state it keeps both the memory_enable and the transfer_enable to its high level because both signals are at low level by default.

On the next clock pulse, the state machine goes to state 54 where only the transfer_enable signal is kept at high level, and where the one clock pulse signal DOWN_CNT is generated to decrement the counter (690). Afterwards, state_machine_4 loops back to state 0.

## Claims

1. A conversion method for converting bytes cells received by a receiver (110) using a first data format into bytes cells to be transmitted to a transmitter (510) using a second data format, said receiver operating at a first frequency defined by a first oscillator (130) and said transmitter operating at a second faster frequency defined by a second oscillator (530); wherein each bytes cell is composed of a header and a fixed number N of bytes;
said conversion method comprising the steps of:
(a) receiving a data bytes cell in the receiver (110);
(b) transmitting said data bytes cell to a FIFO buffer (210) on a data bus (101) where it is stored;
(c) incrementing a first counter (310) when all the data bytes of the bytes cell are stored in the FIFO buffer;
(d) transmitting byte by byte the data bytes cell from the FIFO buffer to a port A of a multiplexer (230) on a data bus (211, 221) on each request signal (lead 513) of transmitter (510);
(e) decrementing the value of said first counter (310) at the end of each data bytes cell transmission until it reaches the value 0;
(f) generating an idle bytes cell from an empty cell generator (250) when no data bytes are left in the FIFO buffer, said idle bytes cell being composed of the same number N of bytes;
(g) transmitting said idle bytes cell to a port B of said multiplexer on a data bus (251); and
(h) generating a port select signal (lead 241) to select port A or B to either transmit the data bytes or the empty bytes of the bytes cell to the transmitter (510) on a data bus (231).

2. The conversion method according to claim 1 further comprising the steps of:
- incrementing at each byte stored in the FIFO buffer (210) a second counter (300) which in turn increments said first counter (310) when it reaches the number N; and
- generating, afterwards, a busy_counter signal (lead 335) from said first counter (310) to a circuit (240) which generates said port select signal (lead 241) to the multiplexer.

3. The conversion method of claim 1 and 2 wherein the data bytes are received and stored in the FIFO buffer at the frequency determined by the first oscillator (130), and wherein the data bytes are transmitted from the FIFO buffer on said data bus (211,221) at the frequency determined by the second oscillator (530) as well as the transmission of the bytes of idle bytes cells on a data bus (251).

4. The conversion method of claims 1 to 3 wherein the receiver uses a fiber distributed data interface protocol associated to said first data format and the transmitter uses a synchronous digital hierarchy protocol associated to said second data format.

5. A conversion method for converting bytes cells received by a receiver (520) using a first data format into bytes cells to be transmitted to a transmitter (120) using a second data format, said receiver operating at a first frequency defined by a first oscillator (530) and said transmitter operating at a second slower frequency defined by a second oscillator (130); wherein each bytes cell is composed of a header and a fixed number N of bytes;
said conversion method comprising the steps of:
(a) receiving an bytes cell in the receiver (520);
(b) transmitting the bytes of said bytes cell on a data bus (521) to a storing means (610) and an empty cell detection means (640) which generates an empty cell detection signal (lead 641) by decoding the header of the received bytes cells;
(c) discarding the bytes of empty cells;
(d) incrementing a first counter (690) when all the data bytes of the bytes cell are stored in said storing means (610);
(e) transmitting byte by byte the data bytes cell from storing means to the transmitter; and
(f) decrementing the value of said first counter (690) at the end of each data bytes cell transmission until it reaches the value 0.

6. The conversion method according to claim 5 further comprising the steps of:
- incrementing at each byte stored in the storing means (610) a second counter (680) which in turn increments said first counter (690); and
- generating, afterwards, a busy-counter signal (lead 761) from said first counter (690) to a circuit (650) which generates a start_of_cell byte delimiter before the transmission of the data bytes to the transmitter (120).

7. The conversion method according to claim 6 further comprising the steps of:
- incrementing a write address pointer (661) of a third counter (660) when a data bytes cell is received by the receiver, and decrementing when an idle bytes cell is detected, said third counter being responsive to the empty cell detection signal (lead 641); and
- incrementing a read address pointer (671) of a fourth counter (670) when a data byte is to be transmitted from the storing means (610) to the transmitter.

8. The conversion method according to any one of claims 5 to 7 wherein the bytes of the received bytes cells are received and stored in the storing means (610) at the frequency determined by the second oscillator (530) and wherein the data bytes are transmitted from the storing means on a data bus (611) at the frequency determined by the first oscillator (530) as well as the transmission of the start_of_cell byte delimiter generated by said circuit (650).

9. The conversion method of claims 5 to 8 wherein the transmitter uses a fiber distributed data interface protocol associated to said second data format and the receiver uses a synchronous digital hierarchy protocol associated to said first data format.

10. A conversion circuit (3) for converting bytes cells received by a receiver (110) using a first data format into bytes cells to be transmitted to a transmitter (510) using a second data format, said receiver operating at a first frequency defined by a first oscillator (130) and said transmitter operating at a second faster frequency defined by a second oscillator (530); wherein each bytes cell is composed of a header and a fixed number N of bytes;
said conversion circuit (3) being characterized in that it comprises:
- means (110) for receiving a data bytes cell in the transmitter and transmitting said data bytes cell to a FIFO buffer (210) on a data bus (111) where it is stored from which it is transmitted on data bus (211);
- a first counter (310) responsive to a control signal (lead 112) generated by said receiver (110) for incrementing its register when all the data bytes of the bytes cell are stored in said FIFO buffer and decrementing its register at the end of each data bytes cell transmission from said FIFO buffer;
- means (250) for generating an idle bytes cell when no data bytes are left in the FIFO buffer and for transmitting said idle bytes cell on a data bus (251); said idle bytes cell being composed of a header and the same number N of bytes; and
- multiplexing means (230) for receiving byte by byte respectively on ports A and B the data bytes cell transmitted from the FIFO buffer on said data bus (211) and the idle bytes cells on said data bus (251); said multiplexing means being responsive to each request signal (lead 513) of said transmitter (510) and a select port signal to transmit either the data bytes or the empty bytes of the bytes cell to the transmitter (510) on a data bus (231).

11. The conversion circuit (3) of claim 10 characterized in that it further comprises:
- a second counter (300) for counting the N bytes of the bytes cell which are stored in said FIFO buffer (210) in order to increment said first counter (310); and
- means (330) for generating a busy-counter signal (lead 335) to a circuit (240) which, afterwards, generates said port select signal (lead 241).

12. The conversion circuit (3) of claims 10 and 11 whereby the data bytes are received and stored in the FIFO buffer at the frequency determined by the first oscillator (130), and wherein the data bytes are transmitted from the FIFO buffer on said data bus (211) at the frequency determined by the second oscillator (530) as well as the transmission of the bytes of idle bytes cells on a data bus (251).

13. The conversion circuit of any one of claims 10 to 12 wherein the receiver uses a fiber distributed data interface protocol associated to said first data format and the transmitter uses a synchronous digital hierarchy protocol associated to said second data format.

14. A conversion circuit (3) for converting bytes cells received by a receiver (520) using a first data format into bytes cells to be transmitted to a transmitter (120) using a second data format, said receiver operating at a first frequency defined by a first oscillator (530) and said transmitter operating at a second slower frequency defined by a second oscillator (130); wherein each bytes cell composed of a header and a fixed number N of bytes;
said conversion characterized in that it comprises:
- means (520) for receiving an bytes cell in the receiver (520) and for transmitting byte by byte said bytes cell on a data bus (521);
- storing means (610) which receives byte by byte said bytes cell, said storing means comprising a dual port bus access (601,611) associated with a write address pointer (661) and a read address pointer (671);
- an empty cell detection means (640) which generates an empty cell detection signal (lead 641) by decoding the header of the received bytes cells; and
- a first counter (690) for incrementing its register when all the data bytes of the bytes cell are stored in said storing means (610) and decrementing its register at the end of each data bytes cell transmission from said storing means.

15. The conversion circuit (3) of claim 14 characterized in that it further comprises:
- a second counter (680) for counting the N bytes of the bytes cell which are stored in said storing means (610) in order to increment said first counter (690); and
- means (330) for generating a busy_counter signal (lead 761) to a circuit (650) which, afterwards, generates a start_of_cell byte delimiter before the transmission of the data bytes to the transmitter (120) on said data bus (611).

16. The conversion circuit (3) of claim 15 further comprising:
- a third counter (660) for incrementing said write address pointer (661) when a data bytes cell is received by the receiver and decrementing said write address pointer when an idle bytes cell is detected, said third counter being responsive to the empty cell detection signal (lead 641); and
- a fourth counter (670) for incrementing said read address pointer (671) when a data byte is to be transmitted from said storing means (610) to the transmitter (120).

17. The conversion circuit according to any one of claims 14 to 16 whereby the data bytes are received and stored in said storing means (610) at the frequency determined by the second oscillator (530) and wherein the data bytes are transmitted from said storing means on a data bus (611) at the frequency determined by the first oscillator (530) as well as the transmission of the start_of_cell byte delimiter generated by said circuit (650).

18. The conversion circuit of any one of claims 14 to 17 wherein the transmitter uses a fiber distributed data interface protocol associated to said second data format and the receiver uses a synchronous digital hierarchy protocol associated to said first data format.
